Europäisches Patentamt

(19) European Patent Office

Office européen des brevets

(11) Publication number : **0 346 036 B1**

# EUROPEAN PATENT SPECIFICATION

(45) Date of publication of patent specification :
07.09.94 Bulletin 94/36

(51) Int. Cl.⁵ : **H04L 27/02**

(21) Application number : **89305631.7**

(22) Date of filing : **05.06.89**

(54) Method of quadrature-phase amplitude modulation.

(30) Priority : **10.06.88 CA 569280**

(43) Date of publication of application :
**13.12.89 Bulletin 89/50**

(45) Publication of the grant of the patent :
**07.09.94 Bulletin 94/36**

(84) Designated Contracting States :
**DE FR GB NL SE**

(56) References cited :
**EP-A- 0 176 089**
**GB-A- 2 103 456**

(72) Inventor : **Kennard, Paul Alan**
**4959 Blackbird Way**
**Pleasanton California 94566 (US)**
Inventor : **Middleton, Joseph Leslie**
**57-2610 Draper Avenue**
**Ottawa Ontario, K2H 8X8 (CA)**
Inventor : **Wu, Kuang-Tsan**
**21 Mulvagh Avenue**
**Nepean Ontario, K2E 6M8 (CA)**
Inventor : **McNicol, John Duncan**
**4 Sagamore Court**
**Nepean Ontario, K2J 2Y4 (CA)**

(74) Representative : **Ryan, John Peter William et al**
**Northern Telecom Europe Limited**
**Patents and Licensing**
**West Road**
**Harlow, Essex CM20 2SH (GB)**

(73) Proprietor : **NORTHERN TELECOM LIMITED**
**600 de la Gauchetiere Street West**
**Montreal Quebec H3B 4N7 (CA)**

## Description

This invention relates to a method of quadrature-phase amplitude modulation, more conveniently referred to as QAM.

In QAM, two carrier signals in phase quadrature are amplitude modulated by modulating signals, and are subsequently combined for example for transmission in a microwave radio transmission system. Each transmitted symbol can thus have any one of a relatively large number of phase and amplitude states, which are generally illustrated as signal points in a signal point constellation in a phase plane diagram. Various signal point constellations, of triangular, rectangular, circular, and hexagonal forms and for various numbers of signal points, are described for example in "Digital Amplitude-Phase Keying with M-ary Alphabets" by C. Melvil Thomas et al., presented at the 1972 International Telemetry Conference, Los Angeles, California.

For digital transmission of binary data signals, it is convenient for the number of signal points in the signal point constellation to be an integral power of 2. Thus for example 64-QAM transmission systems, in which there are 64 signal points in the constellation so that each transmitted symbol can represent 6 bits ($2^6=64$), are well known. With increasing demands for data transmission, and increasingly more sophisticated techniques, it is desirable to provide higher numbers of signal points in the constellation. Accordingly, 256-QAM transmission systems, in which each transmitted symbol represents 8 bits ($2^8=256$), have been proposed.

It is well known that the signal points should be spaced in the phase plane as far apart as possible to provide the greatest possible signal-to-noise (S/N) ratio, and that the signal points should have the smallest possible amplitudes to minimize the peak power of the transmitted signal. It is also desirable to simplify as far as possible the coding and decoding circuitry required for converting between the signal points in the phase plane and the digital signals which they represent. Particularly in view of this last matter, rectangular signal point constellations, in which the signal points are arranged on a rectangular matrix or grid, have been preferred. Where the number of signal points is an even power of 2, the signal point constellation becomes a square array, for example of 16 by 16 signal points for 256-QAM.

A problem with a square array of 256 signal points is that the points at the corners of the square have relatively large amplitudes, and hence result in a high peak power and a high peak-to-average power ratio for the transmitted signal. In order to reduce this problem, it is known for example from Uchibori et al. U.S. Patent No. 4,675,619 dated June 23, 1987 (corresponding to EP-A-176089) and entitled "Multiple Quadrature-Phase Amplitude Modulating System Capable of Reducing a Peak Amplitude" to provide a modified, or stepped, square 256-QAM signal point constellation in which the peak amplitude is reduced, relative to a square constellation, by relocating 6 signal points from each corner of a 16 by 16 point square so that the signal points are arranged in an extrapolated square matrix within a generally circular pattern. While this relocation of signal points results in reduced peak amplitudes, it introduces a further disadvantage, discussed below.

More specifically, Gray coding of digital input signals is generally used so that the digital signal represented by each signal point in the constellation differs from the digital signal represented by any immediately adjacent signal point in only one bit position. Thus a transmitted symbol or signal point which is corrupted and consequently interpreted mistakenly as an adjacent signal point contains only a single bit error. Such a single bit error can be relatively easily detected and corrected using known FEC (forward error correction) coding schemes; for example, a (511,493) BCH code can be used which can correct up to two bits in error in a block of 511 bits, with a resulting increase in the transmitted bit rate of about 3.6%.

However, relocating signal points in the manner discussed above results in 32 of the 256 signal points representing digital signals having 3 bits different from the signal represented by an immediately adjacent signal point, in other words they have a Hamming distance of 3 rather than the preferred Hamming distance of 1. Corruption and consequent misinterpretation of such a signal point results in 3 bits being in error, and this is not correctable using the (511,493) BCH code discussed above.

In addition, it is becoming increasingly desirable for microwave radio transmission channels, which have bandwidths of nominally 20, 30, or 40 MHz for the various microwave radio bands at frequencies of the order of 4, 6, and 11GHz, to accommodate standardized forms of signals for transmission. One of the currently most significant standardized signal forms is SONET, in which signals, referred to as STS-N signals where N is an integer having preferred values of 1, 3, 9, 12, etc., have bit rates of N times 51.84Mb/s. In particular, a so-called STS-3 SONET signal has a bit rate of 155.52Mb/s.

Unfortunately, using 256-QAM with FEC, and allowing for necessary channel filter roll-offs, these microwave channel bandwidths provide a poor and inefficient match for the bit rates of SONET signals. For example, a 256-QAM 40MHz channel provides a transmission rate which is a little less than that required for two STS-3 signals. Accommodating only one STS-3 signal on such a channel would be very inefficient, and accommodating one STS-3 signal together with other, e.g. two STS-1, signals would result in undesired complexity.

In order to avoid this problem, it is desirable to use a modulation scheme which provides a more convenient and efficient matching of microwave radio transmission channels to SONET transmission rates. In particular, a 512-QAM modulation scheme enables this to be done. For example, the use of 512-QAM enables one STS-3 signal to be carried by a 20MHz channel, and two STS-3 signals to be carried by a 40MHz channel, in a convenient and relatively efficient manner.

However, the use of 512-QAM means that the techniques discussed above, relating to modifying a square signal point constellation to make it nearly circular, can no longer be used because 512 is an odd, not an even, power of 2.

For QAM signal point constellations with an odd power of 2 points, e.g. with 32 or 128 signal points, it is known to use a + or cross arrangement of the signal points to reduce peak amplitudes. For example, such arrangements are described in the paper by Thomas et al. referred to above, and in a companion paper by J. G. Smith entitled "Odd-Bit Quadrature Amplitude-Shift Keying", presented at the 1974 International Telemetering Conference, Los Angeles, California. The latter paper also describes a rectangular block signal point constellation. In either case, however, the peak amplitude for a constellation of 512 signal points is undesirably high.

An object of this invention, therefore, is to provide an improved QAM method in which the above disadvantages are reduced or avoided.

## Summary of the Invention

According to one aspect of this invention there is provided a method of quadrature-phase amplitude modulation comprising the step of amplitude modulating two carrier signal components I and Q in phase quadrature in accordance with signal points in a signal point constellation, the signal point constellation comprising $2^{2n+p}$ signal points, where n is an integer equal to or greater than 4 and p is zero or one, arranged in a modified rectangular array with substantially $2^{2n+p-2}$ points in each of four quadrants defined by I and Q axes intersecting at an origin of a phase-plane diagram, the signal points in each quadrant of the array having I and Q component amplitudes of 1, 3, 5,... units, the rectangular array being modified by relocating a plurality of points in each quadrant from positions adjacent to a corner of the rectangle to positions extrapolated from the rectangular array and having reduced distances from the origin, characterized in that in each quadrant each of a majority of the points so relocated is located in a position, relative to the position which it would have in the rectangular array, rotated in the phase-plane through an angle of 180° about one of 2-p predetermined points, each predetermined point having I and Q amplitudes one of which is $2^n$ and the other of which is $2^{n+p-1}$.

In one set of embodiments of the invention, p is zero, resulting in the signal point constellation being a modified square array. In particular, in this case if n=4 the result is a signal point constellation for 256-QAM. In this case preferably at least 5 signal points are relocated in each quadrant, and desirably in each quadrant all of the signal points so relocated are located in positions rotated through an angle of 180° about said predetermined points, there being two predetermined points in each quadrant.

The case of n=5 and p being zero results in a 1024-QAM signal point constellation, in which preferably in each quadrant 19 signal points are relocated and all but one of the relocated signal points are located in positions rotated through an angle of 180° about said predetermined points.

Another set of embodiments of the invention is provided when p is one; in this case there is only one predetermined point in each quadrant. This set concerns the case of modified rectangular signal point constellations, such as for 512-QAM for which n=4, which as has already been indicated is desirable for accommodating SONET format signals on microwave radio transmission channels.

Preferably in this case in each quadrant each of a plurality of the signal points which are relocated is located in a position, relative to the position which it would have in the rectangular array, in which one of its I and Q amplitude coordinates is increased by $2^n$ and the other is reduced by $2^n$. This translation of points whose positions are relocated but not rotated maintains a minimal Hamming distance among the points. For the case of n=4, desirably 32 signal points are relocated in each quadrant, and said majority of the relocated points comprises 22 points in each quadrant. The plurality of signal points which are relocated each with one of its I and Q amplitude co-ordinates increased by $2^n$ and the other reduced by $2^n$ can then comprise 8 signal points in each quadrant.

Preferably the resulting signal point constellation is symmetrical about the I and Q axes and about lines passing through the origin at angles of 45° with respect to the I and Q axes, and the greatest distance of any signal point from the origin is not more than about $\sqrt{666}$ units, and is desirably substantially $\sqrt{650}$ units.

According to another aspect this invention provides a method of quadrature-phase amplitude modulation comprising the step of amplitude modulating two carrier signal components I and Q in phase quadrature in accordance with signal points in a signal point constellation, the signal point constellation comprising 512 signal points arranged in a modified rectangular array with 128 points in each of four quadrants defined by I and Q axes intersecting at an origin of a phase-plane diagram, the signal points in each quadrant of the array having I and Q component amplitudes of 1, 3, 5,... units, the rectangular array being modified by relocating 32 points in each quadrant from positions adjacent to a comer of the rectangle to positions extrapolated from the rectangular array and having reduced distances from the origin, characterized in that in each quadrant: each of about 22 points so relocated is located in a position, relative to the position which it would have in the rectangular array, rotated in the phase-plane through an angle of 180° about a point having I and Q amplitude co-ordinates (16,16); and each of at least about 8 other points so relocated is located in a position, relative to the position which it would have in the rectangular array, in which one of its I and Q amplitude co-ordinates is increased by 16 units and the other is reduced by 16 units.

In this case preferably two further ones of the points which are so relocated are relocated from positions with co-ordinates (27,1) and (31,5) to positions with co-ordinates (11,23) and (9,21) respectively.

Brief Description of the Drawings

The invention will be further understood from the following description with reference to the accompanying drawings, in which:

Fig. 1 illustrates a known 256-QAM signal point constellation;

Figs. 2 to 4 illustrate 256-QAM signal point constellations arranged in accordance with alternative embodiments of the method of this invention;

Figs. 5 and 6 illustrate one quadrant of 1024-QAM signal point constellations arranged in accordance with alternative embodiments of the method of this invention;

Fig. 7 illustrates a first quadrant of a cross-shaped 512-QAM signal point constellation in accordance with the prior art;

Figs. 8 and 9 illustrate respectively a first quadrant and all four quadrants of a 512-QAM signal point constellation arranged in accordance with an embodiment of the method of this invention; and

Fig. 10 illustrates a first quadrant of an alternative 512-QAM signal point constellation arranged in accordance with an embodiment of the method of this invention.

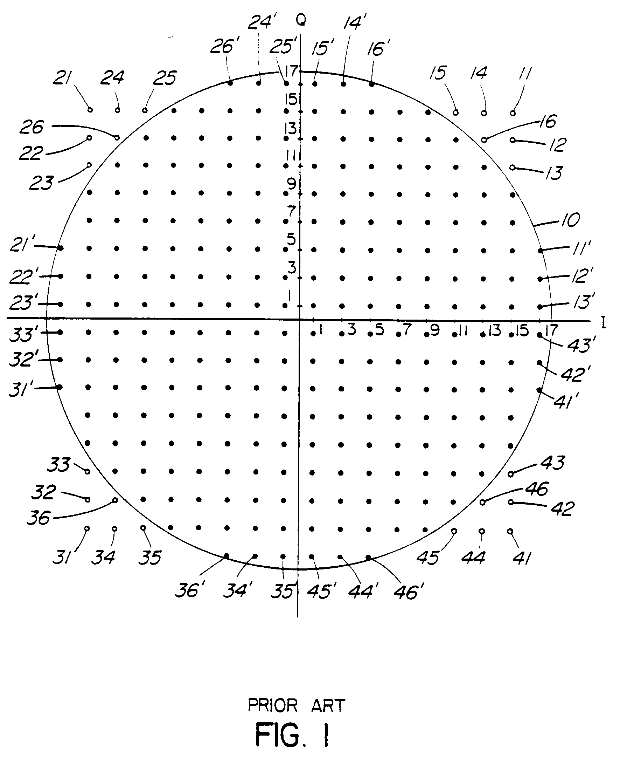

Referring to Fig. 1, a 256-QAM signal point constellation as known from U.S. Patent No. 4,675,619 is illustrated. The signal points are represented in a phase plane diagram showing the relative amplitudes of phase-quadrature carrier signal components I and Q for each point. The 256 points are arranged in a modified or stepped square matrix, the modification comprising relocating the outermost (greatest amplitude) six points in each quadrant in lower amplitude positions closer to the I and Q axes, whereby the 256 points are arranged in a rectangular array within a generally circular boundary, as represented by a circle 10. I and Q component amplitudes are shown for the positive I and Q axes, the points having I and Q amplitudes of 1, 3, 5, ...17 units.

Thus in the first quadrant the outermost signal points 11 to 16 of the square are relocated to lower amplitude points 11' to 16' respectively; similarly in the second, third, and fourth quadrants the points 21 to 26, 31 to 36, and 41 to 46 are relocated to points 21' to 26', 31' to 36', and 41' to 46' respectively.

As the minimum separation of adjacent signal points is 2 units, the point 16 has a distance from the origin (intersection of the I and Q axes) of $\sqrt{338}$ units; it is relocated to the point 16' which has a smaller distance from the origin of $\sqrt{314}$ units. There is a similar or greater reduction in distance to the origin (and hence amplitude) for each of the other relocated signal points, whereby the peak power and peak-to-average power ratio required for transmission are reduced.

As described in U.S. Patent No. 4,675,619, the relocation of signal points in this manner is effected by a code converting unit which may, for example, comprise logic circuitry. As the form of such a code converting unit is known to those of ordinary skill in the art, it need not be described here. Similar forms of code converting unit can be used in carrying out the method of this invention as described further below.

Typically, the digital signals which are represented by the 256 signal points are Gray coded, so that adjacent signal points differ from one another in only one bit position. Representing 4-bit digital signals by their hexadecimal equivalents, each signal point corresponds to a two-digit hexadecimal number, OO to FF. In each hexadecimal number, for the square array and hence for the signal points which are not relocated, the first hexadecimal digit of the number represents a row of the square and the second hexadecimal digit of the number represents a column of the square. With the signal points relocated as shown in Fig. 1 and as taught in the prior art, the signal points correspond to a generally circular pattern of hexadecimal numbers.

Considering for example the points 11' to 16' in the first quadrant, these represent the hexadecimal numbers 88, 98, B8, 89, 8B, and 99 respectively. These differ from the numbers of immediately adjacent signal points in one or three bit positions. For example, the signal point 11' represents the hexadecimal number 88, and is immediately adjacent a signal point (to its left in Fig. 1) representing the hexadecimal number F8. These numbers in binary are respectively 10001000 and 11111000, which differ from the one another in the second, third, and fourth bit positions. Thus there is a Hamming distance of 3 between these numbers. It can be seen that there will be a triple-bit error if the signal point (88) is decoded when the signal point (F8) is transmitted.

The following table summarizes similar information for all of the relocated points 11' to 16' in the first quadrant:

| Point: | 11' | 12' | 13' | 14' | 15' | 16' |
|---|---|---|---|---|---|---|
| Hex Number: | 88 | 98 | B8 | 89 | 8B | 99 |
| Adjacent Number: | F8 | D8 | C8 | 8D | 8C | 8F |
| Hamming Distance: | 3 | 1 | 3 | 1 | 3 | 3 |

Thus in the first quadrant of the modified constellation, 8 signal points (4 of the 6 relocated points plus 4 of the consequently adjacent points), and likewise 8 points in each other quadrant, have their Hamming distance increased to 3 as a result of the relocation of the signal points into the circle 10. This increase in Hamming distance is particularly undesirable because a single error in interpreting one of these signal points can result in a triple bit error in the decoded digital signal, and such a triple error can not be corrected by convenient block error codes such as a (511,493) BCH code which can be used to correct single and double errors.

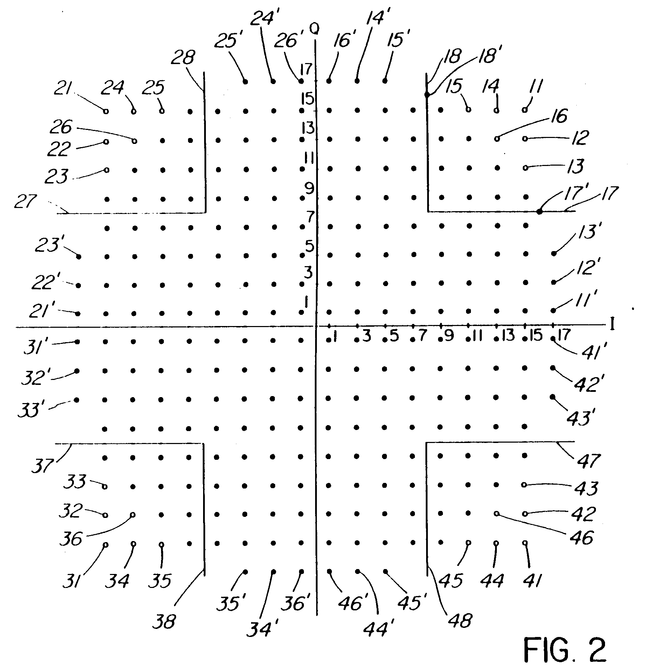

Referring now to Fig. 2, in the 256-QAM signal point constellation shown therein the same points 11 to 16, 21 to 26, 31 to 36, and 41 to 46 are relocated as points 11' to 16', 21' to 26', 31' to 36'; and 41' to 46' respectively. The latter points occupy collectively the same positions as the relocated points in Fig. 1, but individually the points are in different positions.

For example, in the first quadrant, the points 11 to 13, which have the same amplitude of 15 units and differing Q amplitudes, are relocated as the points 11' to 13' respectively, also having the same I amplitude of 17 units and differing Q amplitudes, by being flipped or mirrored about an axis 17 which is parallel to the I axis and equally divides the points in the first quadrant into two halves. In other words, the axis 17 corresponds to a Q amplitude of 8, or substantially half the peak Q amplitude for points in the square matrix.

Similarly, the points 14 and 15 are flipped or mirrored to the points 14' and 15' respectively about an axis 18 corresponding to substantially half the peak I amplitude for points in the square matrix. The point 16 is relocated as the remaining point 16'.

Similar comments apply for the other quadrants, such that for any quadrant q (q=1, 2, 3, or 4) the points q1 to q3 are flipped about an axis q7 to points q1' to q3' respectively, the points q4 and q5 are flipped about an axis q8 to points q4' and q5' respectively, and the point q6 is relocated as the remaining point q6'.

The following table summarizes information, similar to that given above relating to Fig. 1 relating to the relocated points 11' to 16' in the first quadrant of Fig. 2:

| Point: | 11' | 12' | 13' | 14' | 15' | 16' |
|---|---|---|---|---|---|---|
| Hex Number: | 88 | 98 | B8 | 89 | 8B | 99 |
| Adjacent Number: | C8 | D8 | F8 | 8D | 8F | 8C |
| Hamming Distance: | 1 | 1 | 1 | 1 | 1 | 3 |

Thus with the signal point constellation of Fig. 2 a majority of five of the six points relocated in each quadrant retain the desired Hamming distance of 1, and only the sixth point q6' has a Hamming distance of 3. Thus the signal point constellation of Fig. 2 considerably reduced the possibility of triple bit errors occurring due to errors in interpreting the relocated signal points. The number of signal points which can cause a triple-bit error is only 8 in Fig. 2, compared with 32 in Fig. 1.

Viewed alternatively, in Fig. 2 the points 11, 12, and 13 are rotated through an angle of 180° about a point 17' to the points 11', 12', and 13' respectively, and the points 14 and 15 are rotated through an angle of 180° about a point 18' to the points 14' and 15' respectively. The point 17' lies on the axis 17 at an I-component amplitude twice that of the axis 17. Thus a majority (five out of six) of the points relocated in each quadrant are rotated in this manner about the points 17' and 18'. The point 17' has I and Q amplitude co-ordinates (16,8) and the point 18' has I and Q amplitude co-ordinates (8,16).

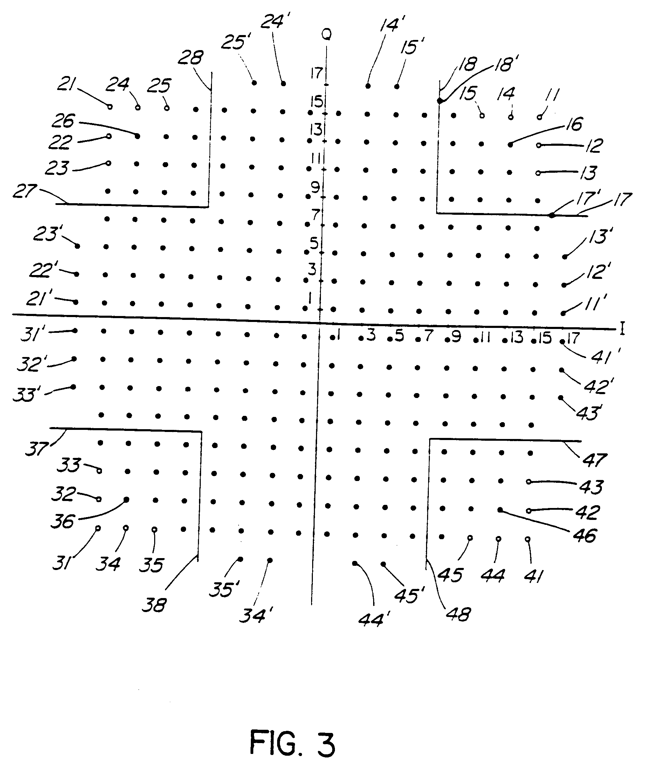

Referring to Fig. 3, the signal point constellation shown therein is identical to that of Fig. 2 except that the signal points 16, 26, 36, and 46 are not relocated, and there are consequently no points 16', 26', 36', and 46'. This provides the same advantages as those discussed above, with the further advantage that now all of the signal points retain a Hamming distance of 1. Thus an error in interpreting any signal point erroneously as an adjacent signal point results in only a single bit error, which as already discussed is correctable using a block code such as a (511,493) BCH code.

This advantage of maintaining true Gray coding in the modified signal point constellation is achieved at the expense of slightly increasing the peak transmitting power required, as the point 16 is at a distance of $\sqrt{338}$ units from the origin whereas in Figs. 1 and 2 the furthest points, such as the point 11' in Fig. 1 or 13' in Fig. 2, are at a distance of $\sqrt{314}$ units from the origin as already described.

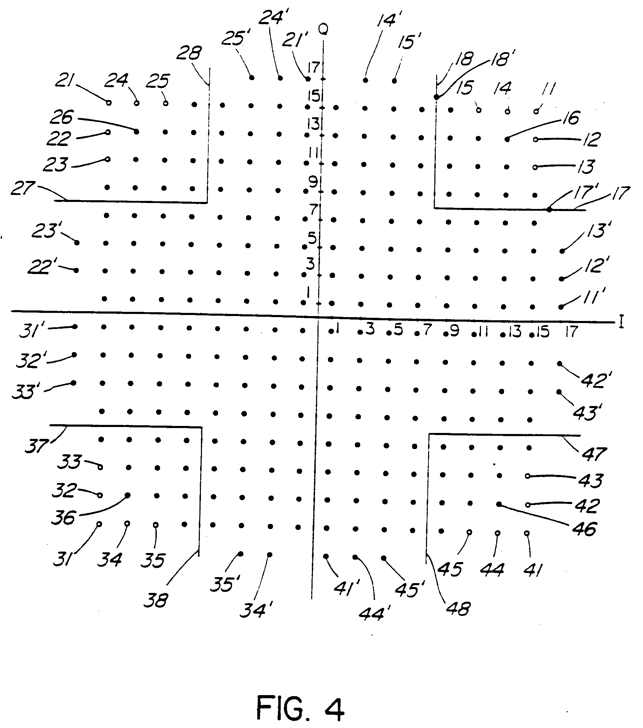

The constellation of Fig. 3 is symmetrical about the I and Q axes, but is not rotationally invariant. In other words, the signal point positions are changed if the I and Q axes are interchanged, corresponding to a phase change of 90°. Fig. 4 illustrates an alternative signal point constellation which, like that of Fig. 2, is rotationally invariant.

In Fig. 4, the signal points in the first and third quadrants are the same as those in the first and third quadrants of Fig. 3. The signal points in the second and fourth quadrants have the same pattern as the first and third quadrants, but rotated through an angle of 90°. Thus in the second quadrant the points 21, 24, and 25 are flipped about the axis 28 parallel to the Q axis to the points 21', 24' and 25' respectively, and the points 22 and 23 are flipped about the axis 27 parallel to the I axis to the points 22' and 23' respectively. Similarly, in the fourth quadrant the points 41, 44, and 45 are flipped about the axis 48 to the points 41', 44', and 45' respectively, and the points 42 and 43 are flipped about the axis 47 to the points 42' and 43' respectively.

Viewed in the alternative way already described with reference to Fig. 2, in each of Figs. 3 and 4 all of the points relocated in each quadrant are rotated through an angle of 180° about a respective point such as the points 17' and 18' in the first quadrant.

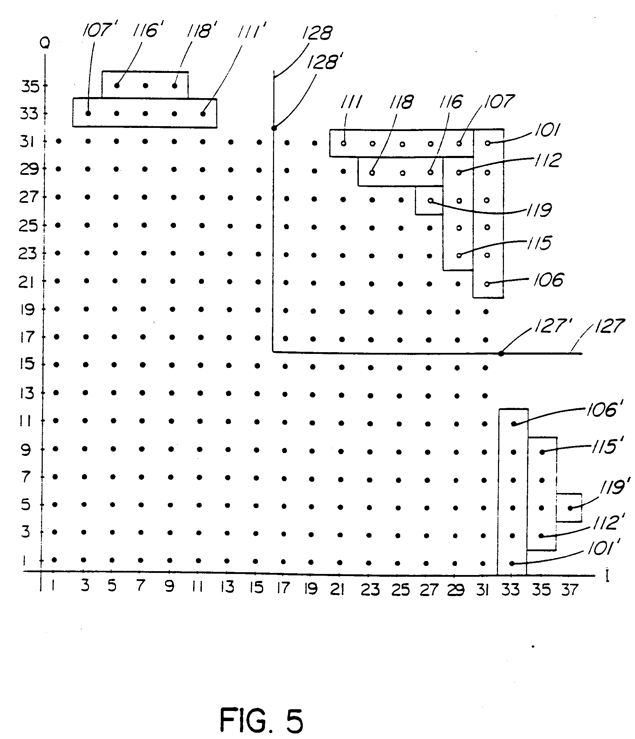

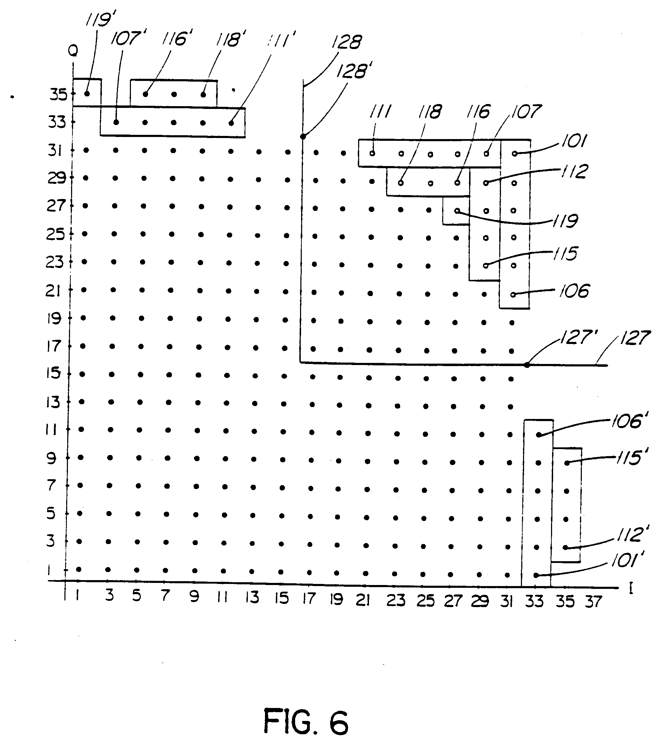

The signal point constellations described above provide 256 points, for 256-QAM. The invention may be similarly applied to other numbers of points in substantially square matrices, i.e. where the number of points is a higher even power of 2. For example, Figs. 5 and 6 illustrate a first quadrant of alternative signal point constellations for 1024-QAM, having 1024 signal points in a modified square matrix of 32 by 32 signal points. Thus there are 256 signal points in this first quadrant; the other quadrants can be symmetric about the axes as described above with reference to Fig. 3 or rotated by 90° as described above with reference to Fig. 4.

Referring to Fig. 5, nineteen points 101 to 119, only some of which are individually referenced for clarity, are relocated from the corner of the square matrix to lower amplitude points 101' to 119' respectively closer to the I and Q axes. As illustrated, the points 101 to 106 are flipped about an axis 127, parallel to the I axis and at substantially half the square's maximum Q component amplitude, to points 101' to 106' respectively. The points 112 to 115 are similarly flipped about the axis to the points 112' to 115', having relatively the same position with respect to the other relocated points, and with higher I component amplitudes but lower overall amplitudes (distance from the origin). The point 119 is similarly flipped about the axis 127 to the point 119', whereby its distance from the origin is reduced to $\sqrt{1394}$ units for a signal point spacing of 2 units.

Similarly, the points 107 to 111 are flipped about an axis 128, parallel to the Q axis and at substantially half the square's maximum I component amplitude, to points 107' to 111' respectively, and the points 116 to 118 are flipped about the axis 128 to points 116' to 118' respectively, with higher Q component amplitudes but lower overall amplitudes.

In the signal point constellation of Fig. 5, all of the points still have, using Gray coding, a Hamming distance of 1, so that the same advantage as described above for Figs. 3 and 4 still apply. The greatest distance from the origin is $\sqrt{1394}$ units as described above for the point 119', which is much less than the distance of $\sqrt{1922}$ units for the point 101.

Fig. 6 is the same as Fig. 5 except that it shows an alternative position 119' to which the point 119 can be relocated. As a result of this change, the greatest distance from the origin is reduced to $\sqrt{1354}$ units.

The position of the point 119' in Fig. 6 is such that it has an increased separation of $\sqrt{8}$ units from the signal point 107' from which it has a Hamming distance of 3. As is known from curves of error probability versus signal-to-noise ratio, such an increased separation results in a greatly reduced probability of error. Thus although an error in interpreting the signal point 119' in Fig. 6 erroneously as the point 107' would produce a triple bit error due to the Hamming distance of 3, such an error is particularly unlikely in view of the increased separation between the points 119' and 107'.

Viewed alternatively, in Fig. 5 all of the relocated points 101 to 119, and in Fig. 6 all but one and hence a majority of these points, are rotated through an angle of 180° about a respective point 127' or 128', which points lie on the axes 127 and 128 respectively and have twice the I and Q component amplitudes respectively of the axes 128 and 127 respectively. The points 127' and 128' have I and Q amplitude co-ordinates (32,16) and (16,32) respectively.

The relocated signal point positions shown in Figs. 5 and 6 are given as examples, and other relocations of the signal points can be made within the scope of the invention. For example, the point 107 could be rotated through 180° about the point 127′ instead of about the point 128′ as in Figs. 5 and 6, to the I,Q co-ordinate position (35,1).

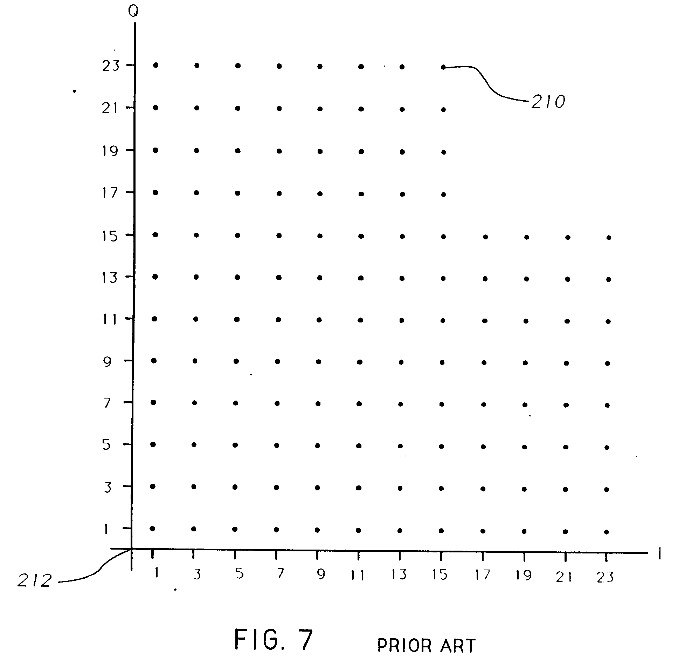

Referring to Fig. 7, the first quadrant of a + or cross-shaped 512-QAM signal point constellation as would be provided in accordance with the prior art is illustrated. The signal points are represented in a phase plane diagram showing the relative amplitudes of phase-quadrature carrier signal components I and Q for each point. The 128 points in this first quadrant are arranged in a rectangular array, with I and Q component amplitudes of 1, 3, 5, ...23 units. In the other three quadrants there are another 128 points in each quadrant correspondingly arranged but with negative values of the I and/or Q components.

A point such as the point 210 having the I,Q co-ordinates (15,23) has a greatest distance from the origin 212 (intersection of the I and Q axes) of, and correspondingly represents a peak amplitude proportional to, √754 units. As has already been explained, it is desirable to reduce this peak power.

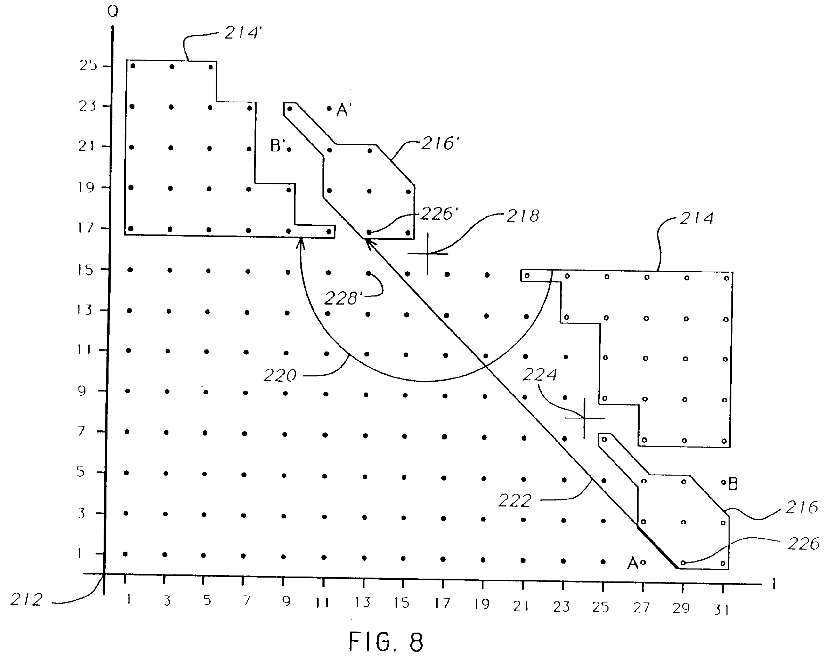

Referring now to Fig. 8, there is illustrated a first quadrant of a 512-QAM signal point constellation arranged in accordance with an embodiment of the method of this invention.

In Fig. 8, solid dots represent signal points which are used for transmission, and open dots represent original positions from which some of the transmitted signal point positions are relocated, in the same manner as described above.

As is known, each transmitted 512-QAM symbol represents 9 bits of a digital signal which is being transmitted ($2^9$=512). In the arrangement of Figs. 8 and 9, 5 of the 9 bits determine an I-component amplitude and the remaining 4 bits determine a Q-component amplitude of the transmitted signal. As shown for only the first quadrant in Fig. 8, this results in a rectangular array of signal points with I-component amplitudes from 1 to 31 and Q-component amplitudes from 1 to 15, assuming a signal point spacing of 2 units in each direction. The 128 signal points in the first quadrant thus comprise 22 points shown within an area 214, 8 points shown within another area 216, and two points referenced A and B, all of which signal points are relocated for transmission as described further below and which are shown as open dots, and 96 points with Q-component amplitudes of 15 or less and I-component amplitudes of 25 or less, which are not relocated and which are shown as solid dots.

The digital signals which are represented by the 512 signal points are Gray coded, so that adjacent signal points differ from one another in only one bit position. In other words, there is a Hamming distance of one between any two adjacent signal points. The relocation of signal points for transmission is effected in a manner to preserve as far as possible this Hamming distance, while at the same time reducing as far as possible the distance of each transmitted signal point from the origin 212, thereby to reduce the peak transmitted power and peak-to-average power ratio.

Accordingly, the 22 points within the area 214 are all relocated by rotation through an angle of 180° about a point 218 having the I,Q co-ordinates (16,16) to corresponding positions within an area 214′, as shown by a semi-circular line 220. This relocation reduces the distance of each point from the origin 212 and preserves the Hamming distance of one for these relocated points.

Furthermore, the 8 points within the area 216 are all relocated by translation, in a direction as shown by a line 222, to corresponding positions within an area 216′; effectively the area 216 is translated through the point 218 to the area 216′. More particularly, each point within the area 216 is translated to a new position within the area 216′ by increasing its Q-component amplitude by 16 ($2^4$) units and decreasing its I-component amplitude by 16 units. Viewed alternatively, the points within the area 216 can be regarded as being relocated by two consecutive rotations each through 180° about a respective point. The first such rotation is about a point 224 having the I,Q co-ordinates (24,8), and the second such rotation is about the point 218 (or the first rotation can be considered to be about the point 218, and the second rotation being about a point with the I,Q co-ordinates (8,24)).

The above-described relocation of the 8 points within the area 216 again reduces the distances of these signal points from the origin 212, whilst to a large extent maintaining the Hamming distance of one for these points. More particularly, the Hamming distance of one is maintained among the translated points, and is only increased in respect of points at boundaries of the translated set of points.

For example, consider a point 226 having the (I,Q) co-ordinates (29,1). This is relocated for transmission, by the code converting unit, to a point 226′ having the co-ordinates (13,17). Due to an error, this may be wrongly interpreted at a receiver as being an adjacent point 228 having the co-ordinates (13,15). The points 226′ and 228 are on different sides of a boundary between points which are relocated and other points which are not relocated. The original point 226 has the 9-bit Gray code value 10001,1000 for the I,Q components respectively. The incorrectly interpreted point 228 has the 9-bit Gray code value 11101,1100, which has 2 bits in error for the I component and 1 bit in error for the Q component. These incorrect bits are corrected using FEC coding applied individually to each of the 9 bit lines supplying the code converting unit in the transmission system modulator, with corresponding FEC decoding in the 9 bit lines leading from the code converting unit in the receiver's

EP 0 346 036 B1

demodulator.

The two further points referenced A and B are relocated to the respective positions A' and B', which are selected to provide an optimum relocation of these points especially in respect of their distances from the origin 212. More particularly, the point A at the co-ordinates (27,1) is relocated to the point A' at the co-ordinates (11,23), and the point B at the co-ordinates (31,5) is relocated to the point B' at the co-ordinates (9,21). Alternatives for these points are discussed further below.

With the relocated signal points as shown by solid dots in Fig. 8, the greatest distance of any point from the origin 212 is √650 units, which is considerably less than the √754 figure for the cross constellation of Fig.7, with a corresponding decrease in peak power required of the transmission system. At the same time, the relocation of points is effected in a manner which maintains a small Hamming distance between adjacent signal points, whereby errors can be largely eliminated by using appropriate error correcting codes.

It is important to note the practical and commercial significance of the peak power reduction which is achieved in this embodiment of the invention. Relative to the √650 peak figure provided as described above, the prior art figure of √754 corresponds to an increased peak power requirement for the transmitter of 10log(754/650)dB, or about 0.65dB. At a typical incremental cost of the order of $1,000 per dB of transmitter peak power, the decreased peak power provided by this invention enables a substantial saving in costs.

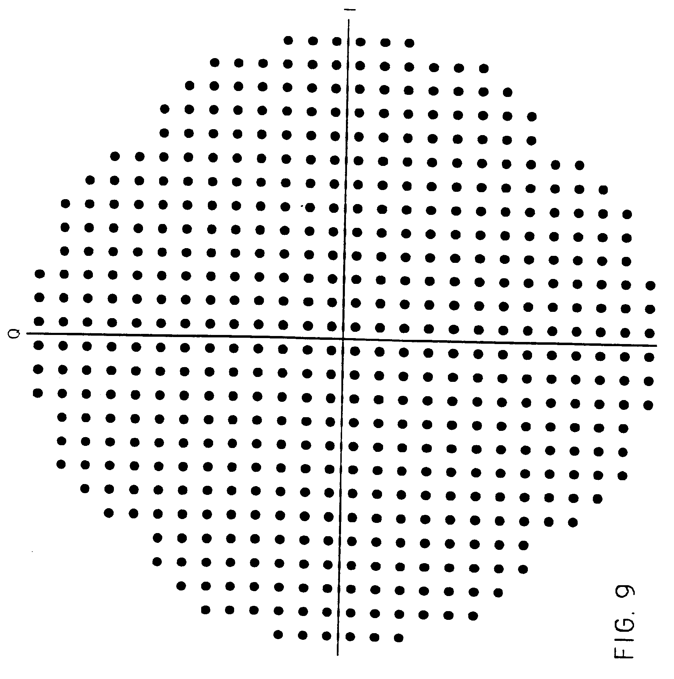

Fig. 9 illustrates the overall signal point constellation which results from the relocation of points as described with reference to Fig. 8 being applied to all four quadrants of an initially rectangular block of 512 points. The relocation is applied symmetrically in the four quadrants, whereby the resulting constellation has both quadrant symmetry and symmetry with respect to 45° phase angles. A 45° phase angle would be represented in the drawings by lines at 45° with respect to the I and Q axes, for example a line passing through the points 212 and 218 in Fig. 8. This 45° phase angle symmetry is a significant advantage in practice, in that the modulation scheme is consequently "well-behaved" at times before carrier recovery is established, when frequency errors produce resulting phase changes having the effect of the signal point constellation rotating about the I and Q axes.

As mentioned above, alternatives exist for relocating the points A and B. While these alternatives still provide a reduction in peak power in relation to the cross constellation of the prior art, they require greater peak powers than the embodiment of the invention described above with reference to Figs. 8 and 9 and are less preferred for this reason.

One of these alternatives is not to relocate the point A but to leave it in its original position, and to relocate the point B as one of the points in the area 214, so that it is moved to the I,Q co-ordinates (1,27). The point A and the relocated point B would then have the greatest distance from the origin of √730 units. In this case, it would be less necessary to relocate other points which are at positions closer than this to the origin, such as the points with the I,Q co-ordinates (21,15),(23,13), and (25,7).

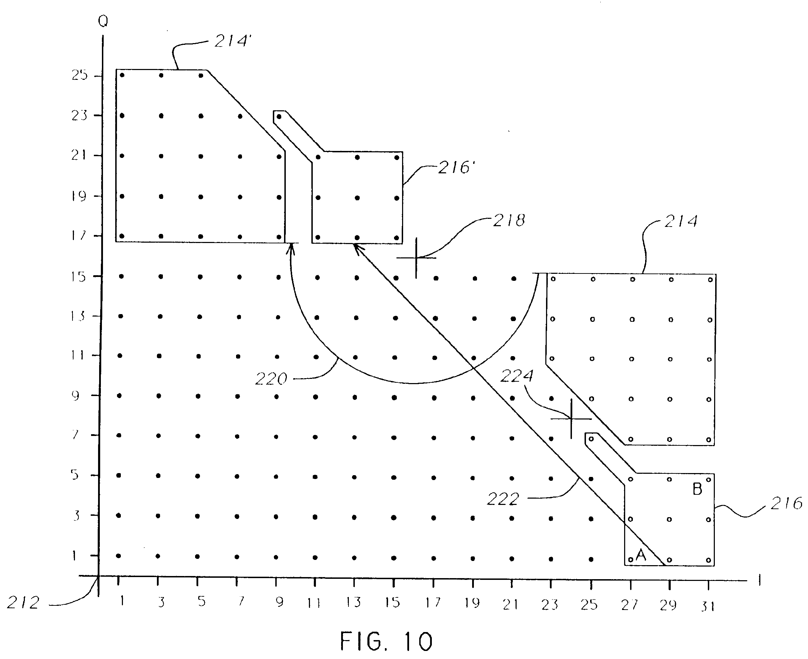

A further alternative is to modify the relocation of points to be as shown in Fig. 10. In Fig. 10, the areas 214 and 216 are modified so that the points A and B can both be included within the area 216; the point at the I,Q co-ordinates (21,15) is consequently omitted from the area 214 and is not relocated. This point now defines the greatest distance from the origin, which in this case is √666 units. The point at the I,Q co-ordinates (23,11) is in this case included within the area 214 and is moved accordingly, so that the resulting signal point constellation is symmetrical about the I and Q axes and about 45° lines or phase angles with respect thereto.

Other alternative relocations of points may be effected along similar lines to those described above, as deemed appropriate in particular circumstances.

The signal point constellations described above with reference to Figs. 8 to 10 provide 512 points, for 512-QAM. The invention may be similarly applied to higher numbers of points which are odd powers of 2, for example for 2048-QAM.

Although in the above description reference is made to relocating points by translating them or rotating them through 180°, it should be appreciated that this is to provide a full understanding and appreciation of the invention and that in carrying out the invention there need be no actual movement of any signal point. In other words, the rectangular arrays of points would not themselves be produced, but rather the points of the signal point constellations would be produced directly from digital input signals, for example using a PROM (programmable read-only memory). Thus for example for the 512-QAM signal point constellations a PROM having 512 storage locations each for the I and Q component values (5 bits each) of a respective signal point of the constellation could be addressed with a 9-bit digital input signal to read out directly the respective I and Q component values.

Although particular embodiments of the invention have been described in detail, it should be appreciated that numerous modifications, variations, and adaptations may be made thereto without departing from the scope of the invention as defined in the claims.

8

## Claims

1. A method of quadrature-phase amplitude modulation comprising the step of amplitude modulating two carrier signal components I and Q in phase quadrature in accordance with signal points in a signal point constellation, the signal point constellation comprising $2^{2n+p}$ signal points, where n is an integer equal to or greater than 4 and p is zero or one, arranged in a modified rectangular array with substantially $2^{2n+p-2}$ points in each of four quadrants defined by I and Q axes intersecting at an origin of a phase-plane diagram, the signal points in each quadrant of the array having I and Q component amplitudes of 1, 3, 5,... units, the rectangular array being modified by relocating a plurality of points in each quadrant from positions adjacent to a corner of the rectangle to positions extrapolated from the rectangular array and having reduced distances from the origin, <u>characterized in that</u> in each quadrant each of a majority of the points so relocated is located in a position, relative to the position which it would have in the rectangular array, rotated in the phase-plane through an angle of 180° about one of 2-p predetermined points (17′,18′ (Figs. 2-4); 127′,128′ (Figs. 5-6); 218 (Figs. 8 & 10)), each predetermined point having I and Q amplitudes one of which is $2^n$ and the other of which is $2^{n+p-1}$.

2. A method as claimed in claim 1 wherein n=4 and p is zero (Figs. 2-4).

3. A method as claimed in claim 2 wherein at least 5 signal points (11-15) are relocated in each quadrant.

4. A method as claimed in claim 1, 2, or 3 wherein in each quadrant all of the signal points so relocated are located in positions rotated through an angle of 180° about said predetermined points (Figs. 3-5).

5. A method as claimed in claim 1 wherein n=5 and p is zero (Figs. 5-6).

6. A method as daimed in claim 5 wherein 19 signal points (101-119) are relocated in each quadrant.

7. A method as claimed in claim 2, 3, 5, or 6 wherein in each quadrant all but one (16 (Fig. 2); 119 (Fig. 6)) of the relocated signal points are located in positions rotated through an angle of 180° about said predetermined points.

8. A method as claimed in any of claims 2 to 7 wherein the signal points in the four quadrants are relocated so that the signal point constellation is symmetric about the I and Q axes.

9. A method as claimed in any of claims 2 to 7 wherein the signal points in the four quadrants are relocated so that the signal point constellation is rotationally invariant for phase changes of 90°.

10. A method as claimed in claim 1 wherein n=4 and p is one (Figs. 8-10).

11. A method as claimed in claim 10 wherein about 32 signal points are relocated in each quadrant.

12. A method as claimed in claim 11 wherein said majority of the relocated points comprises about 22 points (214) in each quadrant.

13. A method as claimed in any of claims 10 to 12 wherein in each quadrant each of a plurality of the signal points (216) which are relocated is located in a position, relative to the position which it would have in the rectangular array, in which one of its I and Q amplitude co-ordinates is increased by $2^n$ and the other is reduced by $2^n$.

14. A method as claimed in claim 13 wherein said plurality of signal points which are relocated each with one of its I and Q amplitude co-ordinates increased by $2^n$ and the other reduced by $2^n$ comprises at least about 8 signal points in each quadrant.

15. A method as claimed in any of claims 10 to 14 wherein the signal point constellation is symmetrical about the I and Q axes and about lines passing through the origin at angles of 45° with respect to the I and Q axes.

16. A method as claimed in any of claims 10 to 15 wherein the greatest distance of any signal point from the origin is not more than about √666 units.

17. A method as claimed in any of claims 10 to 15 wherein the greatest distance of any signal point from the origin is substantially $\sqrt{650}$ units.

18. A method of quadrature-phase amplitude modulation comprising the step of amplitude modulating two carrier signal components I and Q in phase quadrature in accordance with signal points in a signal point constellation, the signal point constellation comprising 512 signal points arranged in a modified rectangular array with 128 points in each of four quadrants defined by I and Q axes intersecting at an origin of a phase-plane diagram, the signal points in each quadrant of the array having I and Q component amplitudes of 1, 3, 5,... units, the rectangular array being modified by relocating 32 points in each quadrant from positions adjacent to a corner of the rectangle to positions extrapolated from the rectangular array and having reduced distances from the origin, <u>characterized in that</u> in each quadrant:

each of about 22 points (214) so relocated is located in a position, relative to the position which it would have in the rectangular array, rotated in the phase-plane through an angle of 180° about a point (218) having I and Q amplitude co-ordinates 16,16; and

each of at least about 8 other points (216) so relocated is located in a position, relative to the position which it would have in the rectangular array, in which one of its I and Q amplitude coordinates is increased by 16 units and the other is reduced by 16 units.

19. A method as claimed in claim 18 wherein the signal point constellation is symmetrical about the I and Q axes and about lines passing through the origin at angles of 45° with respect to the I and Q axes.

20. A method as claimed in claim 18 or 19 wherein the greatest distance of any signal point from the origin is substantially $\sqrt{650}$ units.

21. A method as claimed in any of claims 18 to 20 wherein two further ones of the points which are so relocated are relocated from positions (A.B) with co-ordinate 27,1 and 31,5 to positions (A',B') with co-ordinates 11,23 and 9,21 respectively.

## Patentansprüche

1. Verfahren zur Quadraturphasen-Amplitudenmodulation mit dem Schritt der Amplitudenmodulation von zwei Trägersignalkomponenten I und Q in Phasenquadratur entsprechend Signalpunkten in einer Signalpunktkonstellation, die $2^{2n+p}$ Signalpunkte, worin n eine ganze Zahl gleich oder größer als 4 und p Null oder Eins ist, umfaßt, die in einer modifizierten rechtwinkligen Anordnung mit im wesentlichen $2^{2n+p-2}$ Punkten in jedem der vier Quadranten angeordnet sind, die durch I- und Q-Achsen definiert sind, die sich am Ursprung eines Phasenebenen-Diagramms schneiden, wobei die Signalpunkte in jedem Quadranten der Anordnung I- und Q-Komponentenamplituden von 1, 3, 5, ... Einheiten aufweisen und die rechtwinklige Anordnung dadurch modifiziert ist, daß eine er Anzahl von Punkten in jedem Quadranten von Positionen benachbart zu einer Ecke des Rechteckes auf Positionen verlegt ist, die aus der rechtwinkligen Anordnung heraus extrapoliert sind und verringerte Abstände von dem Ursprung aufweisen, dadurch gekennzeichnet, daß in jedem Quadranten jeder einer Mehrheit der auf diese Weise verlegten Punkte auf einer Position liegt, die bezüglich der Position, die er in der rechtwinkligen Anordnung haben würde, in der Phasenebene über einen Winkel von 180° um einen von 2-p vorgegebenen Punkten (17',18' (Fig. 2-4); 127',128' (Fig. 5-6); 218 (Fig. 8 und 10)) gedreht ist, wobei jeder vorgebene Punkt I- und Q-Amplituden aufweist, von denen eine $2^n$ und die andere $2^{n+p-1}$ ist.

2. Verfahren nach Anspruch 1, bei dem n=4 und p gleich Null ist (Fig. 2-4).

3. Verfahren nach Anspruch 2, bei dem zumindestens 5 Signalpunkte (11-15) in jedem Quadranten verlegt werden.

4. Verfahren nach Anspruch 1, 2 oder 3, bei dem in jedem Quadranten alle derart verlegten Signalpunkte auf Positionen liegen, die über einen Winkel von 180° um die vorgegebenen Punkte gedreht sind (Fig. 3 bis 5).

5. Verfahren nach Anspruch 1, bei dem n=5 und p gleich Null ist (Fig. 5-6).

6. Verfahren nach Anspruch 5, bei dem 19 Signalpunkte (101-119) in jedem Quadranten verlegt werden.

7. Verfahren nach Anspruch 2, 3, 5 oder 6, bei dem in jedem Quadranten alle mit Ausnahme eines (16 (Fig. 2); 119 (Fig. 6)) der verlegten Signalpunkte auf Positionen liegen, die über einen Winkel von 180° um die vorgegebenen Punkte gedreht sind.

8. Verfahren nach einem der Ansprüche 2 bis 7, bei den die Signalpunkte in den vier Quadranten derart verlegt sind, daß die Signalpunktkonstellation um die I- und Q-Achsen symmetrisch ist.

9. Verfahren nach einem der Ansprüche 2 bis 7, bei dem die Signalpunkte in den vier Quadranten derart verlegt sind, daß die Signalpunktkonstellation für Phasenänderungen von 90° drehrichtungsmäßig unveränderlich ist.

10. Verfahren nach Anspruch 1, bei dem n=4 und p gleich 1 ist (Fig. 8-10).

11. Verfahren nach Anspruch 10, bei dem ungefähr 32 Signalpunkte in jedem Quadranten verlegt werden.

12. Verfahren nach Anspruch 11, bei dem die Mehrheit der verlegten Punkte ungefähr 22 Punkte (214) in jedem Quadranten umfaßt.

13. Verfahren nach einem der Ansprüche 10 bis 12, bei dem in jedem Quadranten jeder einer Anzahl der Signalpunkte 216, die verlegt werden, auf einer Position bezüglich der Position, die er in der rechtwinkligen Anordnung haben würde, liegt, in der eine seiner I- und Q-Amplitudenkoordinaten um $2^n$ vergrößert und die andere um $2^n$ verringert ist.

14. Verfahren nach Anspruch 13, bei dem die Anzahl von Signalpunkten, die verlegt werden, wobei jeweils eine ihrer I- und Q-Amplitudenkoordinaten um $2^n$ vergrößert und die andere um $2^n$ verringert ist, zumindestens 8 Signalpunkte in jedem Quadranten umfaßt.

15. Verfahren nach einem der Ansprüche 10 bis 14, bei dem die Signalpunktkonstellation symmetrisch um die I- und Q-Achsen und um Linien ist, die durch den Ursprung unter Winkeln von 45° bezüglich der I- und Q-Achsen hindurchlaufen.

16. Verfahren nach einem der Ansprüche 10 bis 15, bei dem der größte Abstand irgendeines Signalpunktes von dem Ursprung nicht größer als ungefähr $\sqrt{666}$ Einheiten ist.

17. Verfahren nach einem der Ansprüche 10 bis 15, bei dem der größte Abstand irgendeines Signalpunktes von dem Ursprung im wesentlichen gleich $\sqrt{650}$ Einheiten ist.

18. Verfahren zur Quadraturphasen-Amplitudenmodulation mit dem Schritt der Amplitudenmodulation von zwei Trägersignalkomponenten I und Q in Phasenquadratur entsprechend Signalpunkten in einer Signalpunktkonstellation, die 512 Signalpunkte umfaßt, die in einer modifizierten rechtwinkligen Anordnung mit 128 Punkten in jedem der vier Quadranten angeordnet sind, die durch die I-und Q-Achsen definiert sind, die sich am Ursprung eines Phasenebenen-Diagramms schneiden, wobei die Signalpunkte in jedem Quadranten der Anordnung I- und Q-Komponentenamplituden von 1, 3, 5, ... Einheiten aufweisen und die rechtwinklige Anordnung dadurch modifiziert wird, daß 32 Punkte in jedem Quadranten von Positionen benachbart zu einer Ecke des Rechteckes auf Positionen verlegt werden, die aus der rechtwinkligen Anordnung extrapoliert sind, und verringerte Abstände von dem Ursprung aufweisen,
dadurch gekennzeichnet, daß in jedem Quadranten:
    jeder von ungefähr 22 Punkten (214), die auf diese Weise verlegt sind, auf einer Position bezüglich der Position, die er in der rechtwinkligen Anordnung haben würde, liegt, die in der Phasenebene über einen Winkel von 180° um einen Punkt (218) gedreht ist, der I- und Q-Amplitudenkoordinaten (16,16) aufweist, und
    jeder von zumindestens acht weiteren Punkten (216), der auf diese Weise verlegt ist, auf einer Position bezüglich der Position, die er in der rechtwinkligen Anordnung haben würde, liegt, in der eine seiner I- und Q-Amplitudenkoordinaten um 16 Einheiten vergrößert und die andere um 16 Einheiten verringert ist.

19. Verfahren nach Anspruch 18, bei dem die Signalpunktkonstellation syymetrisch um die I- und Q-Achsen und um Linien ist, die durch den Ursprung unter Winkeln von 45° bezüglich der I- und Q-Achsen laufen.

**20.** Verfahren nach Anspruch 18 oder 19, bei dem der größte Abstand irgendeines Signalpunktes von dem Ursprung im wesentlichen gleich $\sqrt{650}$ Einheiten ist.

**21.** Verfahren nach einem der Ansprüche 18 bis 20, bei dem zwei weitere der Punkte, die auf diese Weise verlegt sind, von Positionen (A,B) mit Koordinaten 27,1 und 31,5 auf Positionen (A′,B′) mit Koordinaten 11,23 bzw. 9,21 verlegt sind.

**Revendications**

**1.** Procédé de modulation d'amplitude en quadrature, comprenant l'étape de modulation en amplitude de deux composantes I et Q d'un signal de porteuse en quadrature en fonction de points de signaux dans une constellation de points de signaux, la constellation de points de signaux comprenant $2^{2n+p}$ points de signaux, n étant un nombre entier égal ou supérieur à 4 et p étant égal à 0 ou 1, les points étant disposés avec un arrangement rectangulaire modifié comprenant pratiquement $2^{2n+p-2}$ points dans chacun des quatre quadrants délimités par les axes I et Q qui se recouvrent à l'origine d'un diagramme dans le plan de phase, les points de signaux de chaque quadrant de l'arrangement ayant des amplitudes de composantes I et Q égales à 1, 3, 5,...unités, l'arrangement rectangulaire étant modifié par déplacement de plusieurs points de chaque quadrant des positions adjacentes à un coin du rectangle vers des positions extrapolées de l'arrangement rectangulaire et ayant des distances réduites à l'origine, caractérisé en ce que, dans chaque quadrant, chacun des points d'une majorité de points ainsi déplacés occupe une position, par rapport à la position qu'il aurait dans la matrice rectangulaire, qui a tourné dans le plan de phase d'un angle de 180° autour de l'un de 2-p points prédéterminés (17′, 18′ (figures 2 à 4) ; 127′, 128′ (figures 5-6) ; 218 (figures 8 et 10)), chaque point prédéterminé ayant des amplitudes I et Q dont l'une est $2^n$ et l'autre est $2^{n+p-1}$.

**2.** Procédé selon la revendication 1, dans lequel n = 4 et p est égal à zéro (figures 2 à 4).

**3.** Procédé selon la revendication 2, dans lequel 5 points de signaux au moins (11 à 15) sont déplacés dans chaque quadrant.

**4.** Procédé selon la revendication 1, 2 ou 3, dans lequel, dans chaque quadrant, tous les points de signaux ainsi déplacés sont mis à des positions qui ont tourné d'un angle de 180° autour des points prédéterminés (figures 3 à 5).

**5.** Procédé selon la revendication 1, dans lequel n = 5 et p est égal à zéro (figures 5 et 6).

**6.** Procédé selon la revendication 5, dans lequel 19 points de signaux (101 à 119) sont déplacés dans chaque quadrant.

**7.** Procédé selon la revendication 2, 3, 5 ou 6, dans lequel, dans chaque quadrant, tous les points de signaux déplacés sauf un (16 (figure 2) ; 119 (figure 6)) sont placés dans des positions qui ont tourné d'un angle de 180° autour des points prédéterminés.

**8.** Procédé selon l'une quelconque des revendications 2 à 7, dans lequel les points de signaux des quatre quadrants sont déplacés afin que la constellation de points de signaux soit symétrique autour des axes I et Q.

**9.** Procédé selon l'une quelconque des revendications 2 à 7, dans lequel les points de signaux des quatre quadrants sont déplacés afin que la constellation de points de signaux soit invariante en rotation pour des changements de phase de 90°.

**10.** Procédé selon la revendication 1, dans lequel n = 4 et p est égal à 1 (figures 8 à 10).

**11.** Procédé selon la revendication 10, dans lequel 32 points de signaux environ sont déplacés dans chaque quadrant.

**12.** Procédé selon la revendication 11, dans lequel la majorité des points déplacés comprend 22 points environ (214) dans chaque quadrant.

**13.** Procédé selon l'une quelconque des revendications 10 à 12, dans lequel, dans chaque quadrant, chacun des points d'un groupe de points de signaux (216) qui sont déplacés occupe une position, par rapport à la position qu'il aurait dans l'arrangement rectangulaire, dans laquelle l'une de ses coordonnées d'amplitudes I et Q est accrue de $2^n$ et l'autre est réduite de $2^n$.

**14.** Procédé selon la revendication 13, dans lequel plusieurs points de signaux qui sont déplacés chacun avec l'une de ses coordonnées d'amplitudes I et Q augmentée de $2^n$ et l'autre réduite de $2^n$ comportent au moins 8 points de signaux environ dans chaque quadrant.

**15.** Procédé selon l'une quelconque des revendications 10 à 14, dans lequel la constellation de points de signaux est symétrique autour des axes I et Q et autour d'axes passant par l'origine et faisant des angles de 45° avec les axes I et Q.

**16.** Procédé selon l'une quelconque des revendications 10 à 15, dans lequel la plus grande distance d'un point de signal quelconque à l'origine ne dépasse pas environ $\sqrt{666}$ unités.

**17.** Procédé selon l'une quelconque des revendications 10 à 15, dans lequel la plus grande distance d'un point de signal quelconque à l'origine est pratiquement égale à $\sqrt{650}$ unités.

**18.** Procédé de modulation d'amplitude en quadrature, comprenant l'étape de modulation en amplitude de deux composantes I et Q d'un signal de porteuse en quadrature en fonction de points de signaux dans une constellation de points de signaux, la constellation de points de signaux comprenant 512 points de signaux disposés avec un arrangement rectangulaire modifié ayant 128 points dans chacun de quatre quadrants déterminés par les axes I et Q qui se recoupent à l'origine d'un diagramme dans le plan de phase, les points de signaux de chaque quadrant de l'arrangement ayant des amplitudes des composantes I et Q égales à 1, 3, 5,...unités, l'arrangement rectangulaire étant modifié par déplacement de 32 points dans chaque quadrant de positions adjacentes à un coin du rectangle vers des positions extrapolées de l'arrangement rectangulaire et ayant des distances réduites à l'origine, caractérisé en ce que, dans chaque quadrant :

chacun de 22 points environ (214) ainsi déplacés occupe une position, par rapport à la position qu'il aurait eu dans l'arrangement rectangulaire, qui a tourné dans le plan de phase d'un angle de 180° autour d'un point (218) ayant des coordonnées d'amplitudes I et Q 16,16, et

chacun d'au moins 8 autres points environ (216) ainsi déplacés occupe une position, par rapport à la position qu'il aurait eu dans l'arrangement rectangulaire, dans laquelle l'une de ses coordonnées d'amplitudes I et Q est augmentée de 16 unités et l'autre est réduite de 16 unités.

**19.** Procédé selon la revendication 18, dans laquelle la constellation de points de signaux est symétrique par rapport aux axes I et Q et par rapport à des axes passant par l'origine et faisant des angles de 45° avec les axes I et Q.

**20.** Procédé selon la revendication 18 ou 19, dans lequel la plus grande distance d'un point de signal quelconque à l'origine est pratiquement égal à $\sqrt{650}$ unités.

**21.** Procédé selon l'une quelconque des revendications 18 à 20, dans lequel deux points supplémentaires parmi les points qui sont déplacés sont déplacés des positions (A, B) de coordonnées 27,11 et 31,5 vers des positions (A', B') de coordonnées 11,23 et 9,21 respectivement.

PRIOR ART

FIG. 1

FIG. 2

FIG. 3

FIG. 4

FIG. 5

FIG. 6

EP 0 346 036 B1

FIG. 7    PRIOR ART

20

FIG. 8

FIG. 9

FIG. 10